# EUROPÄISCHE PATENTSCHRIFT

(11) **EP 2 507 894 B1**
(45) Veröffentlichungstag und Bekanntmachung des Hinweises auf die Patenterteilung: **12.02.2014**
(21) Anmeldenummer: 10790733.9
(22) Anmeldetag: 06.12.2010
(51) Int. Cl.: H02K 21/22, H02K 1/12, H02K 1/14

(54) **MIT PERMANENTMAGNETEN ERREGTE ELEKTRISCHE MASCHINE**
ELECTRIC MACHINE EXCITED BY PERMANENT MAGNETS
MACHINE ÉLECTRIQUE EXCITÉE PAR DES AIMANTS PERMANENTS

(30) Priorität: 04.12.2009 DE 102009057067
(43) Veröffentlichungstag der Anmeldung: 10.10.2012
(73) Patentinhaber: Compact Dynamics GmbH, 82319 Starnberg (DE)
(72) Erfinder: HOFFMANN, Bernhard, 82319 Starnberg (DE); GRUENDL, Andreas, 82319 Starnberg (DE)
(74) Vertreter: Schmidt, Steffen
(86) Internationale Anmeldenummer: PCT/EP2010/007401
(87) Internationale Veröffentlichungsnummer: WO 2011/066996

(56) Entgegenhaltungen:
- DE-A1- 19 704 769
- JP-A- 2005 253 259
- JP-A- 2005 287 185
- US-B2- 7 358 629

## Beschreibung

### Technischer Bereich

Hier wird eine mit Permanentmagneten erregte elektrische Maschine vorgestellt. Diese hat einen Ständer und einen Läufer, wobei der Ständer eine Ständerspule aufweist und der Läufer mit Permanentmagnet-Elementen versehen ist, oder der Läufer eine Läuferspule aufweist und der Ständer mit Permanentmagnet-Elementen versehen ist.

Aus der EP 0 218 522 A1 ist eine synchron erregte elektrische Maschine mit C-förmigen Magnetfluss-Jochen und in axialen Reihen angeordneten Magnetfluss-Leitstücke bekannt, die mit Permanentmagneten des Läufers zumindest teilweise fluchtend ausgerichtet sind.

### Begriffsdefinitionen

Unter dem Begriff "mit Permanentmagneten erregte elektrische Maschinen" werden sowohl Motoren als auch Generatoren verstanden. Dabei ist es unerheblich, ob eine solche Maschine als rund laufende Maschine oder zum Beispiel als Linearmotor ausgestaltet ist. Außerdem ist die Erfindung sowohl bei Innenläufermaschinen als auch bei Außenläufermaschinen einsetzbar.

### Stand der Technik

Im Stand der Technik ist üblicherweise ein Eisenjoch mit zwei Schenkeln von einer Spule umgeben. Im Fall eines elektrischen Motors ruft die stromdurchflossene Spule in den beiden Schenkeln einen magnetischen Fluss hervor. Dieser magnetische Fluss fließt von einem Schenkel über einen Luftspalt, tritt mit den Permanentmagnet-Elementen des Läufers in Wechselwirkung und fließt über den Luftspalt in dem anderen Schenkel. Derartige elektrische Maschinen haben eine begrenzte Leistungsdichte.

Aus der DE 197 04 769 A1 ist eine Permanentmagneterregte elektrische Maschine mit einem Ständer und einem Läufer bekannt. Dabei hat der Ständer eine Spulenanordnung und der Läufer ist mit mehreren Permanentmagnet-Elementen versehen. Die Spulenanordnung hat eine Wicklung, die ein Fluss-Joch mit zwei Schenkeln umgibt. Zwischen den Schenkeln sind voneinander beabstandete und mit den Enden der Schenkel fluchtende erste Fluss-Leitstücke angeordnet. Einander benachbarte Permanentmagnet-Elemente sind jeweils entgegengesetzt magnetisch orientiert und die Permanentmagnet-Elemente sind zu einer Magnetscheibe zusammengefasst. Auf der den Enden der Schenkel und den ersten Fluss-Leitstücken abgewandten Seite der Permanentmagnet-Elemente sind zweite Fluss-Leitstücke angeordnet. Die Enden der Schenkel sowie die ersten und die zweiten Fluss-Leitstücke sind den Permanentmagnet-Elementen jeweils unter Bildung eines Luftspaltes zugewandt. Die Permanentmagnet-Elemente sind in bestimmten Positionen des Läufers relativ zum Ständer mit wenigstens einigen der ersten oder der zweiten Fluss-Leitstücke sowie den Enden der Schenkel zumindest teilweise fluchtend ausgerichtet.

Die IP 2005 287 185 offenbart eine elektrische Maschine gemäß Oberbegriff des Anspruchs 1.

### Zugrunde liegendes Problem

Die vorgestellte Maschine und ihre Varianten soll dazu dienen, einen kompakt bauenden und hocheffizienten Motor oder Generator mit hoher Leistungsdichte bereit zu stellen.

### Lösung

Zur Lösung dieses Problems wird eine mit Permanentmagneten erregte elektrische Maschine gemäß Anspruch 1 vorgeschlagen. Dabei hat der Ständer eine Spulenanordnung und der Läufer ist mit mehreren Permanentmagnet-Elementen versehen. Alternativ dazu kann auch der Läufer eine Spulenanordnung haben und der Ständer mit Permanentmagnet-Elementen versehen sein. Die Spulenanordnung hat wenigstens eine Wicklung und umgibt ein Fluss-Joch zumindest teilweise. Das Fluss-Joch hat wenigstens einen Schenkel. Zwischen jeweils zwei Schenkeln sind voneinander beabstandete und mit den Enden der Schenkel fluchtende Fluss-Leitstücke angeordnet. Einander benachbarte Permanentmagnet-Elemente sind entgegengesetzt magnetisch orientiert und zu einer Magnetscheibe zusammengefasst. Auch auf der von den Schenkeln abgewandten Seite der Permanentmagnet-Elemente sind Fluss-Leitstücke angeordnet. Die Schenkel sowie die Fluss-Leitstücke sind den Permanentmagnet-Elementen unter Bildung eines Luftspaltes zugewandt. Die Permanentmagnet-Elemente sind in bestimmten Positionen des Läufers relativ zum Ständer mit einigen der Fluss-Leitstücke zumindest teilweise fluchtend ausgerichtet.

Diese Anordnung erreicht, dass magnetischer Fluss von einem Schenkel des Fluss-Joches abwechselnd durch die Fluss-Leitstücke und zu diesen ausgerichteten Permanentmagnet-Elementen zu dem anderen Schenkel des Fluss-Joches fließt. Bei einer Ausgestaltung geht der magnetische Fluss ausgehend von einem der Fluss-Joche über einen Luftspalt in die Magnetscheibe. Von der Magnetscheibe verzweigt der magnetische Fluss über jeweils einen Luftspalt parallel in die zu beiden Seiten der Magnetscheibe angeordneten ersten und zweiten Fluss-Leitstücke. Anschließend vereint sich der magnetische Fluss über jeweils einen Luftspalt wieder in der Magnetscheibe. Dieser sich verzweigende und wieder vereinende Übergang des magnetischen Flusses von der Magnetscheibe zu den ersten und zweiten Fluss-Leitstücken wiederholt sich bis zum anderen Schenkel des Fluss-Joches. Bei dieser Ausgestaltung sind jeweils benachbarte Permanentmagnet-Elemente im Wesentlichen längs zu der den Luftspalten zugewandten Oberfläche der Magnetscheibe orientiert.

Bei einer anderen Ausgestaltung geht der magnetische Fluss ausgehend von einem der Schenkel des Fluss-Joches über einen Luftspalt in die Magnetscheibe. Von der Magnetscheibe geht der magnetische Fluss über einen Luftspalt in ein auf der anderen Seite der Magnetscheibe angeordneten zweites Fluss-Leitstück. Anschließend geht der magnetische Fluss über einen Luftspalt wieder in die Magnetscheibe und von dort über einen Luftspalt in ein auf der Seite der Fluss-Joche angeordnetes erstes Fluss-Leitstück. Dieser hin- und hergehende Übergang des magnetischen Flusses von der Magnetscheibe zu den ersten und zweiten Fluss-Leitstücken wiederholt sich bis zum anderen Schenkel des Fluss-Joches. Bei dieser Ausgestaltung sind jeweils benachbarte Permanentmagnet-Elemente im Wesentlichen quer zu der den Luftspalten zugewandten Oberfläche der Magnetscheibe orientiert.

Bei allen Ausführungsformen sind zwischen zwei voneinander beabstandeten Enden unterschiedlicher Schenkel jeweils wenigstens zwei oder mehr erste und zweite Fluss-Leitstücke angeordnet. Dabei sind die ersten Fluss-Leitstücke auf der einen Seite der Magnetscheibe und die zweiten Fluss-Leitstücke auf der anderen Seite der Magnetscheibe angeordnet. Wesentlich ist hierbei, dass die Flussleitstücke (zumindest in Richtung des magnetischen Flusses) weder untereinander noch zu den Schenkeln eine magnetisch leitfähige Verbindung haben. Damit kann der magnetische Fluss praktisch nur von einem der Schenkel zum anderen der Schenkel über mehrere Luftspalte beiderseits der Magnetscheibe fließen. Diese Luftspalte befinden sich zwischen (i) den Enden der Schenkel und der Magnetscheibe, (ii) den ersten Fluss-Leitstücken und der Magnetscheibe, sowie (iii) den zweiten Fluss-Leitstücken und der Magnetscheibe.

Bei herkömmlichen Maschinen geht der magnetische Fluss in der Regel von einem der Schenkel des Fluss-Joches über einen Luftspalt zu dem Permanentmagnet-Element und dann über den Luftspalt zu dem zweiten Schenkel des Fluss-Joches. Demgegenüber wechselt bei den hier vorgestellten Ausführungsformen der magnetische Fluss zwischen zwei Schenkeln der Fluss-Joche mehrfach von den Permanentmagnet-Elementen der Magnetscheibe über die Luftspalte zu den ersten und zweiten Fluss-Leitstücken und wieder zurück. Damit liefert / erhält eine Spulenanordnung zwischen den beiden Schenkeln den durch mehr als zwei Luftspalte / Permanentmagnet-Elemente / Fluss-Leitstücke geflossenen magnetischen Fluss.

Dies stellt einen verhältnismäßig großen Raum für die Spulenanordnung bereit. Dieses serielle Durchdringen mehrerer Luftspalte führt bei den vorgestellten Anordnungen zu einem sehr effizienten Ausnutzen des vorhandenen Raumes in der elektrischen Maschine. Auch erlaubt der relativ große Abstand zwischen den beiden Schenkeln eine hohe magnetische Durchflutung der Fluss-Joche. Die in Reihe auftretenden Flussänderungen an den Luftspalten im Zusammenwirken mit dem Spulenanordnung durchfließenden Strom tragen zur Kraftbildung (im Fall eines Motorbetriebes) bei. Durch die verbesserte Raumausnutzung erhöht sich außerdem der Wirkungsgrad oder die Leistungsdichte der Maschine.

### Weitere Ausgestaltungen und Weiterbildungen der Erfindung

Bevorzugt weist der Ständer die Fluss-Joche und die Spulenanordnung mit den Fluss-Leitstücken auf und der Läufer ist mit den Permanentmagnet-Elementen versehen. Dies vermeidet die Notwendigkeit bewegter (zum Beispiel rotierender oder längsgleitender) Stromübergänge auf eine im Läufer vorhandene Spulenanordnung.

Die ersten und die zweiten Fluss-Leitstücke sowie das Magnetfluss-Joch und dessen Schenkel sind aus gestapelten weicheisenhaltigen Blechen gebildet, wobei die Bleche im Wesentlichen parallel zu einer Stirnfläche der Magnetscheibe orientiert sind. Diese Stirnfläche der Magnetscheibe ist die den Fluss-Leitstücken und den Magnetfluss-Jochen zugewandte Seitenfläche der Magnetscheibe. Die Dicke dieser Bleche ist in erster Linie von der Frequenz des die Spulenanordnung durchfließenden Stromes abhängig, da mit steigender Frequenz die Wirbelstromverluste zunehmen.

Bei bekannten Axialflussmaschinen werden zur Führung des magnetischen Flusses bei tolerablen magnetischen Verlusten in der Regel gesinterte pulvereisenhaltige Formteile eingesetzt. Im Gegensatz dazu erlaubt die vorgestellte Ausführung die Führung des magnetischen Flusses in einfach herzustellenden und zu montierenden Stapeln aus weicheisenhaltigen Blechen. In unerwarteter Weise erhöht sich die mit den vorgestellten Ausführungen erzielbare Schubdichte der elektrischen Maschine bei vergleichbarem Bauraum um etwa das zwei- bis vierfache gegenüber herkömmlichen Axial- oder Transversalflussmaschinen ohne die sonst damit einhergehende Erhöhung der ohmschen Wicklungsverluste. Erreichbar ist dieser Effekt letztlich durch eine "Reihenschaltung" der Permanentmagnet-Element-Statorpolpaarungen und deren Zuordnung zu einer einzigen Spulenanordnung mit verhältnismäßig groß ausführbaren Wickelquerschnitt. Eine Spulenanordnung ist mit mehreren, vom gleichen magnetischen Fluss durchsetzten Permanentmagnet-Element-Statorpolpaarungen gekoppelt und ruft daher die mehrfache Kraft pro Spulenanordnung hervor.

Zwischen benachbarten, längs orientierten Permanentmagnet-Elementen sind in einer Variante der Magnetscheibe weicheisenhaltige Flussführungen angeordnet.

Die Spulenanordnung umgibt ein Fluss-Joch mit zwei beabstandeten Schenkeln zumindest teilweise. Dabei beträgt der Abstand der Schenkel im Bereich ihrer der Magnetscheibe zugewandten Enden zueinander (i) zwischen 60% und 140%, (ii) vorzugsweise zwischen 80% und 120%, und (iii) insbesondere zwischen 90% und 110% ihrer Länge. Wenn die (magnetisch wirksame) Länge der Schenkel in etwa ihrem Abstand im Bereich ihrer der Magnetscheibe zugewandten Enden entspricht, sind die magnetischen Streuflussanteile meist tolerierbar.

Bei einer Variante sind die ersten und die zweiten Fluss-Leitstücke längs der Bewegungsrichtung auf beiden Seiten der Magnetscheibe zueinander versetzt angeordnet. In einer anderen Variante sind die ersten und die zweiten Fluss-Leitstücke längs der Bewegungsrichtung auf beiden Seiten der Magnetscheibe miteinander im Wesentlichen fluchtend angeordnet.

Die Magnetfluss-Leitstücke können eine im Wesentlichen quaderförmige Gestalt haben. Es ist auch möglich, ihnen eine sich zu ihren Enden hin in der Breite und/ oder der Höhe verjüngende Gestalt zu geben. Eine solche Formgebung verringert oder minimiert die magnetischen Streuflüsse zwischen benachbarten Magnetfluss-Leitstücken. Die ersten und /oder die zweiten Fluss-Leitstücke haben in den vorgestellten Varianten eine im Querschnitt im Wesentlichen trapezförmige Gestalt, wobei die jeweils größeren Grundflächen der Magnetscheibe zugewandt sind.

Des Weiteren haben die ersten und die zweiten Fluss-Leitstücke im Bereich ihrer der Magnetscheibe zugewandten Grundfläche längs der Bewegungsrichtung eine Gestalt, die so dimensioniert ist, dass sie jeweils mehr als einem, aber nicht mehr als zwei benachbarten Permanentmagnet-Elementen der Magnetscheibe gegenübersteht.

Die Spulenanordnung kann entweder mit Strom einer einzigen Phase betrieben werden oder als Mehrphasenanordnung (vorzugsweise zwei oder mehr als zwei) ausgestaltet sein. Für letzteren Fall kann die Spulenanordnung mehrere nebeneinander oder übereinander angeordnete Wicklungen haben, die dazu eingerichtet sind, phasenversetzt zu einander betrieben zu werden. Alternativ dazu können auch entlang des Umfangs mehrere Sektoren von Spulengruppen und Flussleitstücken angeordnet sein, bei denen die einzelnen Spulenanordnungen mit Strömen unterschiedlicher Phasenlage betrieben werden. Dementsprechend sind auch die Flussleitstücke im Umfangsrichtung versetzt anzuordnen.

Zwischen benachbarten Fluss-Leitstücken können zur Erhöhung der Stabilität der Gesamtanordnung magnetisch im Wesentlichen unwirksame Verbinder angeordnet sein, welche die relative Position der Fluss-Leitstücke zueinander festlegen. Diese Verbinder können aus diamagnetischem Material, zum Beispiel Metall, polymerisiertem Kunststoff, oder dergl. bestehen. Wenn die Verbinder aus Metall sind, können diese auch aus einem oder mehrere der Vielzahl der Bleche bestehen, aus denen die Fluss-Leitstücke gebildet sind.

Die Permanentmagnet-Elemente haben vorzugsweise eine im Wesentlichen quaderförmige Gestalt. Sie können jedoch auch im Querschnitt trapez- oder dreieck-, bzw. rautenförmig, oder dergl. sein. Zur Erhöhung der mechanischen Stabilität der Magnetscheibe kann die Magnetscheibe als Kreisringscheibe ausgestaltet sein, die an ihrem Außenumfang und / oder an ihrem Innenumfang einen magnetisch im Wesentlichen unwirksamen Tragring aufweist. Dies gilt insbesondere, wenn die Magnetscheibe ein Teil des Läufers ist.

In einer weiteren Variante kann zu beiden den Luftspalten zugewandten Stirnflächen der Magnetscheibe jeweils eine Spulenanordnung mit wenigstens einer Wicklung angeordnet sein, die ein Fluss-Joch zumindest teilweise umgibt, welches wenigstens einen Schenkel aufweist. Damit kann eine sehr kompakte Ausgestaltung zweier Wicklungssysteme beiderseits des Läufers zur Erhöhung des Drehmoments erzielt werden.

Weiterhin ist es möglich, dass jeder der Schenkel zwei Enden aufweist, wobei zwischen beiden einander gegenüberstehenden Enden der Schenkel jeweils erste und zweite Fluss-Leitstücke angeordnet sind.

### Kurzbeschreibung der Zeichnung

Weitere Merkmale, Eigenschaften, Vorteile und mögliche Abwandlungen werden für einen Fachmann anhand der nachstehenden Beschreibung deutlich, in der auf die beigefügte Zeichnung Bezug genommen ist. Dabei haben gleiche oder gleich wirkende Teile übereinstimmende in den Fig. Bezugszeichen und sind auch analog dargestellt.
In Fig. 1 ist ein schematischer Querschnitt einer Ausführungsform einer mit Permanentmagneten erregten elektrischen Maschine veranschaulicht.
In Fig. 2 ist eine vergrößerte seitliche schematische Teilansicht einer mit Permanentmagneten erregten elektrischen Maschine veranschaulicht.
In Fig. 3 ist eine vergrößerte seitliche schematische Teilansicht einer weiteren Variante einer mit Permanentmagneten erregten elektrischen Maschine veranschaulicht.
In Fig. 4 ist eine Variante der mit Permanentmagneten erregten elektrischen Maschine aus Fig. 2 veranschaulicht.
In Fig. 5 ist eine Variante der mit Permanentmagneten erregten elektrischen Maschine aus Fig. 3 veranschaulicht.
In Fig. 6 ist eine Variante einer Magnetscheibe mit einem Tragring veranschaulicht.

### Detaillierte Beschreibung derzeit bevorzugter Ausführungsformen

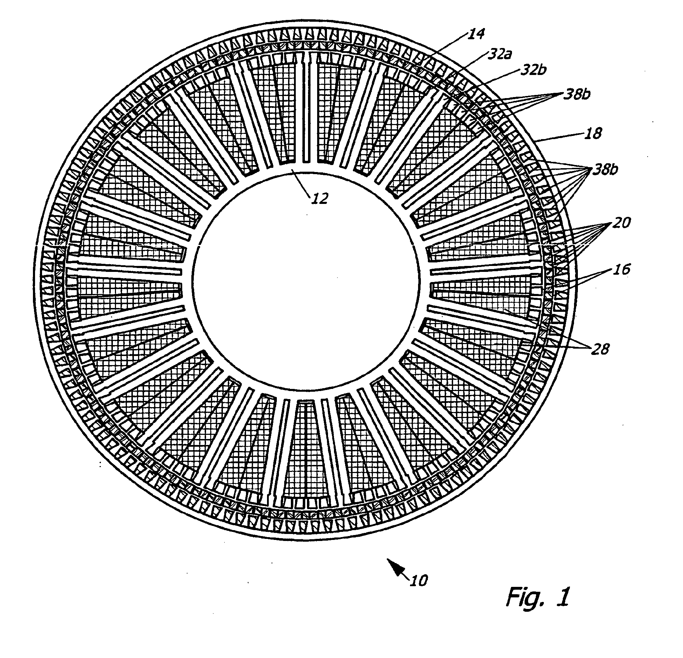

In Fig. 1 ist ein Querschnitt durch eine Ausführungsform einer mit Permanentmagneten erregten elektrischen Maschine 10 in der Ausgestaltung als Außenläufermaschine gezeigt. Das dieser Maschine zugrunde liegende Prinzip ist auch für eine Innenläufermaschine einsetzbar. Die Transversalflussmaschine 10 hat einen Ständer 12 und einen Läufer 14. Zwischen dem Läufer 14 und dem Ständer 12 ist ein Luftspalt 16 gebildet. Der Ständer 12 ist in einem rohrförmigen Gehäuse 18 aufgenommen, das an seinen beiden Stirnseiten jeweils ein nicht gezeigtes Lager zur Aufnahme einer nicht gezeigten An-/Abtriebswelle aufweist. Die An-/Abtriebswelle ist in nicht gezeigter Weise mit dem Läufer 14 drehfest verbunden.

In dieser Variante hat der Ständer 12 eine Spulenanordnung 28. Der Läufer ist mit mehreren Permanentmagnet-Elementen 20 versehen. Einander benachbarte Permanentmagnet-Elemente 20 sind jeweils entgegengesetzt magnetisch orientiert. Die Permanentmagnet-Elemente 20 sind zu einer Magnetscheibe 22 zusammengefasst. Die Magnetscheibe 22 kann im Fall einer sich linear bewegenden Maschine ein im Wesentlichen rechteckiger tafelförmiger Körper sein. Bei einer sich drehenden Maschine kann die Magnetscheibe 22 eine kreisringförmige Gestalt haben. Dabei kann die Magnetscheibe 22 abhängig von der Dicke der Permanentmagnet-Elemente 20 auch zu einer an einen kurzen Rohrabschnitt erinnernden Gestalt permutieren. Die Permanentmagnet-Elemente 20 können als Guß- oder Schnitt-Teile aus einer AlNi- oder AlNiCo-Legierung, aus Barium- oder Strontiumferrit, aus einer SmCo-, oder NdFeB-Legierung, oder aus anderen Selten-Erden-Materialien gebildet sein. Damit sind Energieprodukte (BH)ₘₐₓ von Permanentmagneten im Bereich von etwa 30 bis etwa 300 KiloJoule/ Kubikmeter - auch im erhöhten Temperaturbereich von etwa 150 bis etwa 180 Grad Celsius - erreichbar.

Zur Verbesserung der mechanischen Stabilität können die Permanentmagnet-Elemente 20 auch als Pulverteilchen eingebettet in temperaturbeständige Kunststoffbinder enthaltend zum Beispiel Polyamid, Polyphenylensulfid, Duroplast, Epoxidharz, oder dergl. gebildet sein. Es kann sich bei dem temperaturbeständigen Kunststoffbinder auch um Methacrylatklebstoff, Epoxidharzkleber, Polyurethanklebstoff, Phenolharzklebstoff, Epoxydharz mit Faserverstärkung, oder hydrophobiertes Epoxydharzgießharz handeln. Zur Verstärkung der mechanischen Stabilität kann auch ein die Magnetscheibe 22 vollständig umspannender Metallreif oder -Ring aus Aluminium oder (nicht magnetischem) Stahl vorgesehen sein.

Die Spulenanordnung 28 hat hier eine Vielzahl gleichartiger Wicklungen. Jeder der Wicklungen umgibt Schenkel 32a, 32b zweier benachbarter Fluss-Joche. Zwischen den freien Enden der Schenkel 32a, 32b sind mehrere voneinander beabstandete und mit den Enden der Schenkel 32a, 32b fluchtende erste Fluss-Leitstücke 38a angeordnet. Auf der den Enden der Schenkel 32a, 32b und den ersten Fluss-Leitstücken 38a abgewandten Seite der Permanentmagnet-Elemente 20 sind zweite Fluss-Leitstücke 38b angeordnet. Die Enden der Schenkel 32a, 32b sowie die ersten und die zweiten Fluss-Leitstücke 38a, 38b sind den Permanentmagnet-Elementen 20 der Magnetscheibe 22 jeweils unter Bildung eines Luftspaltes 16a, 16b, 16c, 16d zugewandt.

Die Permanentmagnet-Elemente 20 fluchten in bestimmten Positionen des Läufers 12 relativ zum Ständer 14 mit wenigstens einigen der ersten oder der zweiten Fluss-Leitstücke 38a, 38b sowie den Enden der Schenkel 32a, 32b zumindest teilweise. Bei einer Bewegung der Magnetscheibe relativ zu den Schenkeln 32a, 32b der Fluss-Joche 30, 30' und den ersten und zweiten Fluss-Leitstücken 38a, 38b fließt magnetischer Fluss von einem der Schenkel 32a durch die Permanentmagnet-Elemente 20 und durch die auf beiden Seiten der Magnetscheibe angeordneten ersten und zweiten Fluss-Leitstücke 38a, 38b zu dem anderen Schenkel 32b. Zwischen zwei beabstandeten Schenkeln 32a, 32b sind zwei oder mehr erste Fluss-Leitstücke 38a und zwei oder mehr zweite Fluss-Leitstücke 38b angeordnet. Für die vorliegenden Varianten sind bis zu vier oder fünf erste und bis zu vier oder fünf zweite Fluss-Leitstücke 38a, 38b möglich.

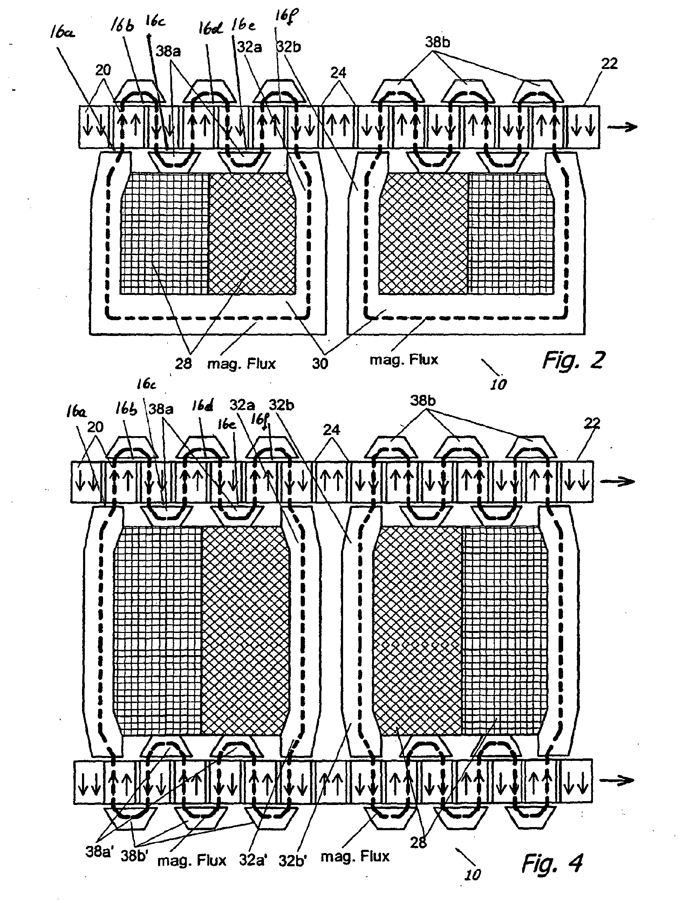

Wie insbesondere in den Fig. 2 - 5 deutlich zu erkennen ist, sind zwischen jeweils zwei Enden der Schenkel 32a, 32b jeweils zwei oder drei erste und zweite Fluss-Leitstücke 38a, 38b angeordnet. Damit durchdringt der magnetische Fluss ausgehend von einem der Schenkel 32a nacheinander mehrere Luftspalte 16a, 16b, 16c, 16d zwischen (i) dem Ende des Schenkels 32a und der Magnetscheibe 22, (ii) den ersten Fluss-Leitstücken 38a und der Magnetscheibe 22, und (iii) den zweiten Fluss-Leitstücken 38b und der Magnetscheibe 22 zum anderen Schenkel 32b hin. Die ersten und die zweiten Flussleitstücke 38a, 38b sind weder untereinander noch mit den Schenkeln 32a, 32b magnetisch leitfähig verbunden. Abhängig von der Ausgestaltung der Magnetscheibe 22 und der Anordnung der ersten Fluss-Leitstücke 38a relativ zu den zweiten Fluss-Leitstücken 38b kann der magnetische Fluss nach Art eines Mäanders vom Ende des einen Schenkels 32a zum Ende des anderen Schenkels 32b hin und her durch die Magnetscheibe 22 gehen. Dabei sind zueinander benachbarte Permanentmagnet-Elemente 20 im Wesentlichen quer zu der den Luftspalten 16a, 16b, 16c, 16d zugewandten Oberfläche der Magnetscheibe orientiert.

Außerdem sind die ersten Fluss-Leitstücke 38a zu den zweiten Fluss-Leitstücken 38b längs der Bewegungsrichtung versetzt angeordnet. Diese Variante ist zum Beispiel in den Fig. 2 und 4 veranschaulicht.

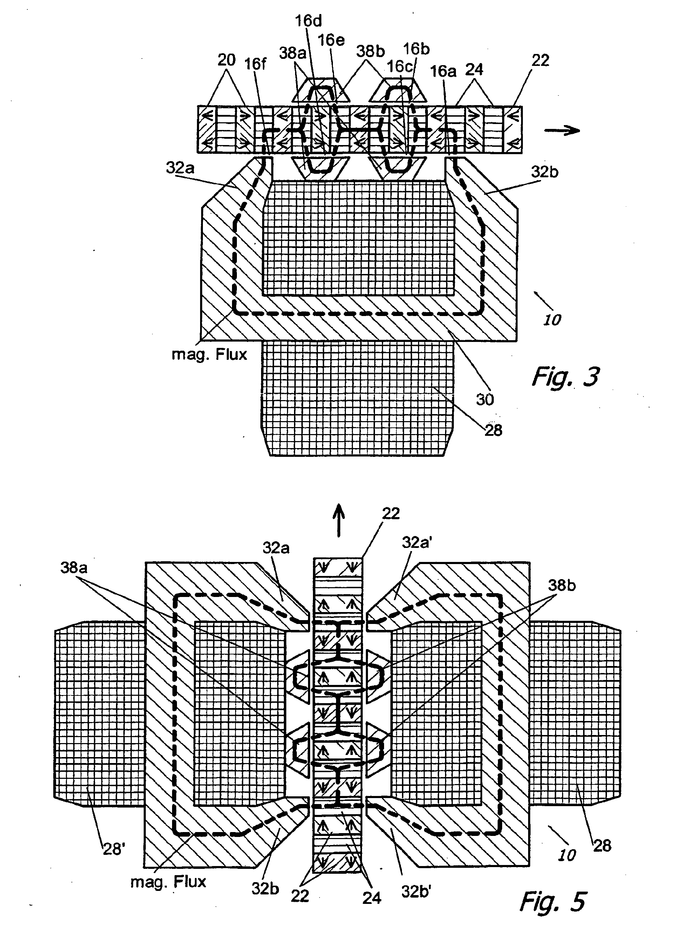

Alternativ dazu können zueinander benachbarte Permanentmagnet-Elemente 20 im Wesentlichen längs zu der den Luftspalten 16a, 16b, 16c, 16d zugewandten Oberfläche der Magnetscheibe orientiert sein. In diesem Fall sind die ersten Fluss-Leitstücke 38a zu den zweiten Fluss-Leitstücken 38b längs der Bewegungsrichtung des Läufers relativ zum Ständer miteinander im Wesentlichen fluchtend angeordnet. Weiterhin sind bei diesen Varianten zwischen den benachbarten, abwechselnd längs orientierten Permanentmagnet-Elementen 20 der Magnetscheibe 22 weicheisenhaltige Flussführungen 24 angeordnet. Diese Variante ist zum Beispiel in den Fig. 3 und 5 veranschaulicht.

In den Fig. 2 und 3 kann im Fall einer rotierenden Maschine die Rotationsachse des Läufers entweder in der Zeichenebene vertikal angeordnet sein, oder die Rotationsachse des Läufers verläuft senkrecht zur Zeichenebene. Die erste dieser Varianten wird auch als Scheibenläufer bezeichnet; die zweite dieser Varianten wird als Trommelläufer bezeichnet.

Bei allen Ausführungsvarianten ist als gemeinsames Gestaltungsmerkmal realisiert, dass die ersten und die zweiten Fluss-Leitstücke 38a, 38b und die Schenkel des Magnetfluss-Joches 30 aus dünnen gestapelten weicheisenhaltigen Blechen gebildet sind. Dabei sind die Bleche im Wesentlichen parallel zu einer / den Stirnfläche /n der Magnetscheibe 22 orientiert. Als dünne Bleche sind dabei Bleche bezeichnet, die nicht dicker als 0,5 mm oder 2 mm sind.

Das Fluss-Joch mit seinen zwei beabstandeten Schenkeln 32a, 32b wird von einer Spulenanordnung 28 umgeben. Der Abstand der Schenkel 32a, 32b im Bereich ihrer der Magnetscheibe zugewandten freien Enden zueinander beträgt zwischen 60% und 140% ihrer (magnetisch effektiven) Länge. Dabei gilt jedes zwischen diesen Werten liegende Verhältnis Abstand / Länge als hier offenbart. Die ersten und die zweiten Fluss-Leitstücke 38a, 38b haben in den hier veranschaulichten Varianten jeweils eine im Querschnitt im Wesentlichen trapezförmige Gestalt. Die jeweils größeren Grundflächen sind dabei der Magnetscheibe zugewandt. Dabei sind die ersten und die zweiten Fluss-Leitstücke 38a, 38b im Bereich ihrer der Magnetscheibe zugewandten Grundfläche längs der Bewegungsrichtung so gestaltet, dass jeweils einem Fluss-Leitstück mehr als ein, aber nicht mehr als zwei benachbarte Permanentmagnet-Elementen 20 der Magnetscheibe gegenüberstehen.

Die Polteilung der Permanentmagnet-Elemente 20 entspricht in etwa der Hälfte (ca. 35% bis 65%) der Polteilung der ersten und der zweiten Fluss-Leitstücke 38a, 38b.

Zwischen benachbarten Fluss-Leitstücken können zur Erhöhung der mechanischen Stabilität magnetisch im Wesentlichen unwirksame Verbinder 60 angeordnet sein, welche die relative Position der Fluss-Leitstücke 38a, 38b zueinander festlegen. Dazu kann ein temperaturbeständiger Kunststoffbinder enthaltend zum Beispiel Polyamid, Polyphenylensulfid, Duroplast, Epoxidharz, oder dergl. verwendet werden. Es kann sich bei dem Kunststoffbinder auch um Methacrylatklebstoff, Epoxidharzkleber, Polyurethanklebstoff, Phenolharzklebstoff, Epoxydharz mit Faserverstärkung, oder hydrophobiertes Epoxydharzgießharz handeln.

In Fig. 4 ist eine Variante veranschaulicht, bei der jeder der Schenkel 32a, 32b zwei Enden aufweist. An beiden Enden der Schenkel ist dabei jeweils eine Magnetscheibe 22, 22' angeordnet. In dieser Ausgestaltung der Maschine sind ebenfalls zwischen beiden einander gegenüberstehenden Enden der Schenkel 32a, 32b; 32a', 32b' jeweils erste und zweite Fluss-Leitstücke 38a, 38b; 38a', 38b' angeordnet. Hier ist eine Spulenanordnung 28 für beide Magnetscheiben 22, 22' vorgesehen.

In Fig. 5 ist eine Variante veranschaulicht, bei der zu beiden Seiten der den Luftspalten zugewandten Stirnflächen der Magnetscheibe 22 jeweils ein Fluss-Joch 30, 30' angeordnet ist. Jedes der Fluss-Joche 30, 30' hat eine Spulenanordnung 28, 28' mit jeweils einer Wicklung. Jedes der Fluss-Joche 30, 30' hat zwei Schenkel 32a, 32b; 32a', 32b', die zueinander fluchten. Auch die zu beiden Seiten der Magnetscheibe 22 zwischen den Schenkeln 32a, 32b; 32a', 32b', angeordneten ersten und zweiten Fluss-Leitstücke 38a, 38b sind zueinander fluchtend angeordnet.

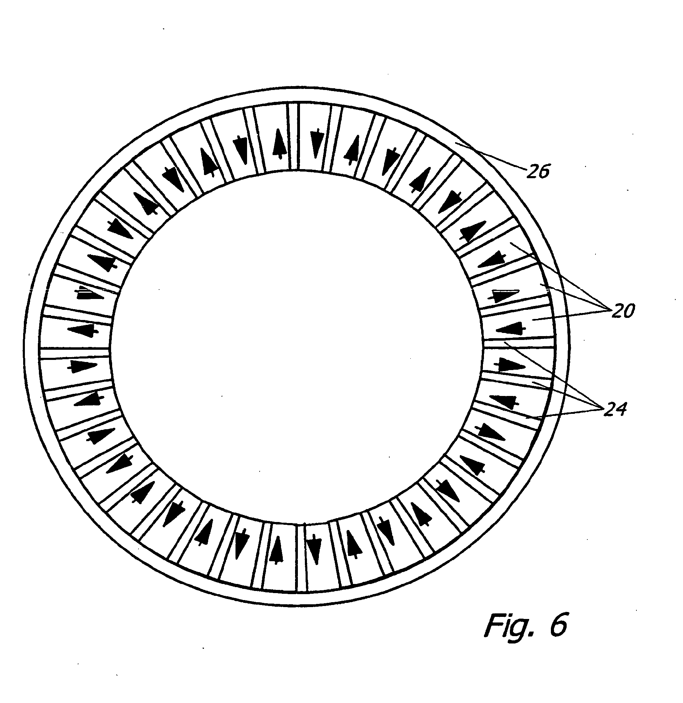

Die Magnetscheibe ist zur Erhöhung der Stabilität als Kreisringscheibe ausgestaltet, die an ihrem Außenumfang und / oder an ihrem Innenumfang einen magnetisch im Wesentlichen unwirksamen Tragring 26 aufweist (siehe zum Beispiel Fig. 6).

Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

## Patentansprüche

1. Mit Permanentmagneten erregte elektrische Maschine (10) mit einem Ständer (12) und einem Läufer (14), wobei
- entweder der Ständer eine Spulenanordnung (28) aufweist und der Läufer mit mehreren Permanentmagnet-Elementen (20) versehen ist, oder der Läufer eine Spulenanordnung aufweist und der Ständer mit Permanentmagnet-Elementen versehen ist,
- die Spulenanordnung (28) wenigstens eine Wicklung aufweist und ein Fluss-Joch (30, 30') zumindest teilweise umgibt, welches zwei benachbarte Schenkel (32a, 32b; 32a', 32b') aufweiset,
- einander benachbarte Permanentmagnet-Elemente (20) jeweils entgegengesetzt magnetisch orientiert und die Permanentmagnet-Elemente (20) zu einer Magnetscheibe zusammengefasst sind,
**dadurch gekennzeichnet, dass**
- zwischen den Schenkeln (32a, 32b) voneinander beabstandete und mit den Enden der Schenkel (32a, 32b) fluchtende erste Fluss-Leitstücke (38a) angeordnet sind, wobei die ersten Fluss-Leitstücke (38a) weder untereinander noch zu den Schenkeln (32a, 32b) eine magnetisch leitfähige Verbindung aufweisen,
- auf der den Enden der Schenkel (32a, 32b) und den ersten Fluss-Leitstücken (38a) abgewandten Seite der Permanentmagnet-Elemente (20) zweite Fluss-Leitstücke (38b) angeordnet sind, wobei die zweiten Fluss-Leitstücke (38b) weder untereinander noch zu den Schenkeln (32a, 32b; 32a', 32b') eine magnetisch leitfähige Verbindung aufweisen,
- die Enden der Schenkel (32a, 32b) sowie die ersten und die zweiten Fluss-Leitstücke (38a, 3ab) den Permanentmagnet-Elementen (20) jeweils unter Bildung eines Luftspaltes (16a, 16b, 16c, 16d, 16e, 16f) zugewandt sind, und
- die Permanentmagnet-Elemente (20) in bestimmten Positionen des Läufers (12) relativ zum Ständer (14) mit wenigstens einigen der ersten oder der zweiten Fluss-Leitstücke (38a, 38b) sowie den Enden der Schenkel (32a, 32b) zumindest teilweise fluchtend ausgerichtet sind, wobei
- zwischen jeweils zwei Enden der Schenkel (32a, 32b;32a', 32b') jeweils wenigstens zwei oder mehr erste oder zweite Fluss-Leitstücke (38a, 38b) angeordnet sind, so dass magnetischer Fluss mehrere Luftspalte (16a, 16b, 16c, 16d, 16e, 16f) zwischen
-- dem Ende eines der Schenkel (32a, 32b, 32a', 32b') und der Magnetscheibe (22),
-- der Magnetscheibe (22) und den ersten Fluss-Leitstücken (38a),
-- der Magnetscheibe (22) und den zweiten Fluss-Leitstücken (38b), sowie
-- der Magnetscheibe (22) und dem Ende des anderen Schenkels (32a, 32b, 32a', 32b') durchdringt.

2. Mit Permanentmagneten erregte elektrische Maschine (10) nach Anspruch 1, wobei
- die ersten und die zweiten Fluss-Leitstücke (38a, 38b) und das Magnetfluss-Joch (30) aus gestapelten weicheisenhaltigen Blechen gebildet sind, wobei die Bleche parallel zu einer Stirnfläche der Magnetscheibe (22) orientiert sind.

3. Mit Permanentmagneten erregte elektrische Maschine (10) nach Anspruch 1 oder 2, wobei
- benachbarte Permanentmagnet-Elemente (20) quer oder längs zu der den Luftspalten (16a, 16b, 16c, 16d) zugewandten Oberfläche der Magnetscheibe (22) orientiert sind.

4. Mit Permanentmagneten erregte elektrische Maschine (10) nach dem vorhergehenden Anspruch, wobei
- zwischen benachbarten, längs orientierten Permanentmagnet-Elementen (20) der Magnetscheibe weicheisenhaltige Flussführungen (24) angeordnet sind.

5. Mit Permanentmagneten erregte elektrische Maschine (10) nach einem der vorhergehenden Ansprüche, wobei
- zwischen zwei beabstandeten Schenkeln (32a, 32b) wenigstens zwei erste Fluss-Leitstücke (38a) und wenigstens zwei zweite Fluss-Leitstücke (38b) angeordnet sind.

6. Mit Permanentmagneten erregte elektrische Maschine (10) nach einem der vorhergehenden Ansprüche, wobei
- die ersten Fluss-Leitstücke (38a) zu den zweiten Fluss-Leitstücken (38b) längs der Bewegungsrichtung versetzt oder miteinander fluchtend angeordnet sind.

7. Mit Permanentmagneten erregte elektrische Maschine (10) nach einem der vorhergehenden Ansprüche, wobei
- die ersten und /oder die zweiten Fluss-Leitstücke (38a, 38b) eine im Querschnitt im Wesentlichen trapezförmige Gestalt aufweisen, wobei die jeweils größeren Grundflächen der Fluss-Leitstücke der Magnetscheibe (22) zugewandt sind.

8. Mit Permanentmagneten erregte elektrische Maschine (10) nach einem der vorhergehenden Ansprüche, wobei
- die ersten und /oder die zweiten Fluss-Leitstücke (38a, 38b) im Bereich ihrer der Magnetscheibe zugewandten Grundfläche längs der Bewegungsrichtung eine Gestalt aufweisen, die jeweils mehr als einem, aber nicht mehr als zwei benachbarten Permanentmagnet-Elementen (20) der Magnetscheibe (22) gegenübersteht.

9. Mit Permanentmagneten erregte elektrische Maschine (10) nach einem der vorhergehenden Ansprüche, wobei
- die Spulenanordnung (28) mehrere koaxial nebeneinander angeordnete Wicklungen aufweist, die dazu eingerichtet sind, phasenversetzt zu einander betrieben zu werden.

10. Mit Permanentmagneten erregte elektrische Maschine (10) nach einem der vorhergehenden Ansprüche, wobei
- zwischen benachbarten Fluss-Leitstücken (38a, 38b) magnetisch unwirksame Verbinder (60) angeordnet sind, welche die relative Position der Fluss-Leitstücke (38a, 38b) zueinander festlegen.

11. Mit Permanentmagneten erregte elektrische Maschine (10) nach einem der vorhergehenden Ansprüche, wobei
- die Magnetscheibe als Kreisringscheibe ausgestaltet ist, die an ihrem Außenumfang und / oder an ihrem Innenumfang einen magnetisch unwirksamen Tragring aufweist.

12. Mit Permanentmagneten erregte elektrische Maschine (10) nach einem der vorhergehenden Ansprüche, wobei
- zu beiden den Luftspalten zugewandten Stirnflächen der Magnetscheibe (22) jeweils eine Spulenanordnung (28) mit wenigstens einer Wicklung angeordnet ist, die ein Fluss-Joch (30, 30') zumindest teilweise umgibt, welches wenigstens einen Schenkel (32a, 32b) aufweist.

13. Mit Permanentmagneten erregte elektrische Maschine (10) nach einem der vorhergehenden Ansprüche, wobei
- jeder der Schenkel (32a, 32b) zwei Enden aufweist, und wobei zwischen beiden einander gegenüberstehenden Enden der Schenkel (32a, 32b) jeweils erste und zweiten Fluss-Leitstücke (38a, 3ab) angeordnet sind.

14. Mit Permanentmagneten erregte elektrische Maschine (10) nach einem der vorhergehenden Ansprüche, wobei
- bei einer Bewegung der Magnetscheibe (22) relativ zu den Fluss-Jochen (30, 30') und den ersten und zweiten Fluss-Leitstücken (38a, 38b) magnetischer Fluss von einem der Schenkel (32a) durch die Permanentmagnet-Elemente (20) und durch die auf beiden Seiten der Magnetscheibe (22) angeordneten ersten und zweiten Fluss-Leitstücke (38a, 38b) zum anderen Schenkel (32b) fließt.

## Claims

1. Electric machine (10) excited by permanent magnets and comprising a stator (12) and a rotor (14),
- either the stator having a coil arrangement (28) and the rotor being provided with a plurality of permanent-magnet elements (20), or the rotor having a coil arrangement and the stator being provided with permanent-magnet elements,
- the coil arrangement (28) having at least one winding and at least partially surrounding a flux yoke (30, 30') that has two adjacent limbs (32a, 32b; 32a', 32b'),
- permanent-magnet elements (20) that are adjacent to each other each having opposing magnetic orientations, and the permanent-magnet elements (20) being combined to form a magnet disc,
**characterized by**
- there being disposed between the limbs (32a, 32b) first flux guide pieces (38a), which are spaced apart from each other and which are in alignment with the ends of the limbs (32a, 32b), the first flux guide pieces (38a) not having a magnetically conductive connection either between each other or to the limbs (32a, 32b),
- second flux guide pieces (38b) being disposed on the side of the permanent-magnet elements (20) that faces away from the ends of the limbs (32a, 32b) and from the first flux guide pieces (38a), the second flux guide pieces (38b) not having a magnetically conductive connection either between each other or to the limbs (32a, 32b; 32a', 32b'),
- the ends of the limbs (32a, 32b) and the first and the second flux guide pieces (38a, 3ab) facing towards the permanent-magnet elements (20), respectively forming an air gap (16a, 16b, 16c, 16d, 16e, 16f), and
- in certain positions of the rotor (12) relative to the stator (14), the permanent-magnet elements (20) being at least partially in alignment with at least some of the first or the second flux guide pieces (38a, 38b) and with the ends of the limbs (32a, 32b),
- at least two or more first or second flux guide pieces (38a, 38b) being respectively disposed between two respective ends of the limbs (32a, 32b; 32a', 32b'), such that magnetic flux passes through a plurality of air gaps (16a, 16b, 16c, 16d, 16e, 16f), between
-- the end of one of the limbs (32a, 32b, 32a', 32b') and the magnet disc (22),
-- the magnet disc (22) and the first flux guide pieces (38a),
-- the magnet disc (22) and the second flux guide pieces (38b), and
-- the magnet disc (22) and the end of the other limb (32a, 32b, 32a', 32b').

2. Electric machine (10) excited by permanent magnets, according to Claim 1,
- the first and the second flux guide pieces (38a, 38b) and the magnetic flux yoke (30) being composed of stacked plates containing soft iron, the plates being oriented parallel to an end face of the magnet disc (22).

3. Electric machine (10) excited by permanent magnets, according to Claim 1 or 2,
- adjacent permanent-magnet elements (20) being oriented transversely or longitudinally in relation to the surface of the magnet disc (22) that faces towards the air gaps (16a, 16b, 16c, 16d).

4. Electric machine (10) excited by permanent magnets, according to the preceding claim,
- flux guides (24) containing soft iron being disposed between adjacent, longitudinally oriented permanent-magnet elements (20) of the magnet disc.

5. Electric machine (10) excited by permanent magnets, according to any one of the preceding claims,
- at least two first flux guide pieces (38a) and at least two second flux guide pieces (38b) being disposed between two spaced-apart limbs (32a, 32b).

6. Electric machine (10) excited by permanent magnets, according to any one of the preceding claims,
- the first flux guide pieces (38a) and the second flux guide pieces (38b) being disposed in an offset manner, along the direction of motion, in relation to each other, or being disposed in alignment with each other.

7. Electric machine (10) excited by permanent magnets, according to any one of the preceding claims,
- the first and/or the second flux guide pieces (38a, 38b) having a substantially trapezoidal shape in cross section, the respectively larger base surfaces of the flux guide pieces facing towards the magnet disc (22).

8. Electric machine (10) excited by permanent magnets, according to any one of the preceding claims,
- the first and/or the second flux guide pieces (38a, 38b) having a shape, along the direction of motion, in the region of their base surface that faces towards the magnet disc, which is respectively opposite more than one, but not more than two adjacent permanent-magnet elements (20) of the magnet disc (22).

9. Electric machine (10) excited by permanent magnets, according to any one of the preceding claims,
- the coil arrangement (28) having a plurality of windings, which are disposed coaxially next to each other and which are set up to be operated with an offset in phase in relation to each other.

10. Electric machine (10) excited by permanent magnets, according to any one of the preceding claims,
- connectors (60) that are magnetically inactive and that fix the relative position of the flux guide pieces (38a, 38b) in relation to each other being disposed between adjacent flux guide pieces (38a, 38b).

11. Electric machine (10) excited by permanent magnets, according to any one of the preceding claims,
- the magnet disc is designed as an annular disc, having on its outer circumference and/or its inner circumference a support ring that is magnetically inactive.

12. Electric machine (10) excited by permanent magnets, according to any one of the preceding claims,
- a coil arrangement (28), having at least one winding, being respectively disposed on both end faces of the magnet disc (22) that face towards the air gaps, which winding at least partially surrounds a flux yoke (30, 30') having at least one limb (32a, 32b).

13. Electric machine (10) excited by permanent magnets, according to any one of the preceding claims,
- each of the limbs (32a, 32b) having two ends, and first and second flux guide pieces (38a, 3ab) being respectively disposed between the two mutually opposite ends of the limbs (32a, 32b).

14. Electric machine (10) excited by permanent magnets, according to any one of the preceding claims,
- upon a motion of the magnet disc (22) relative to the flux yokes (30, 30') and the first and second flux guide pieces (38a, 38b), magnetic flux flows from one of the limbs (32a), through the permanent-magnet elements (20) and through the first and second flux guide pieces (38a, 38b) disposed on both sides of the magnet disc (22), to the other limb (32b).

## Revendications

1. Machine électrique (10) excitée par des aimants permanents, comportant un stator (12) et un rotor (14), dans le cadre de laquelle
- soit le stator présente un agencement de bobines (28) et le rotor est pourvu de plusieurs éléments à aimants permanents (20), soit le rotor présente un agencement de bobines (28) et le stator est pourvu de plusieurs éléments à aimants permanents,
- ledit agencement de bobines (28) présente au moins un bobinage et entoure au moins partiellement une culasse de flux (30, 30'), laquelle présente deux bras voisins (32a, 32b ; 32a', 32b'),
- des éléments à aimants permanents (20) adjacents l'un à l'autre ont une orientation magnétique opposée, et les éléments à aimants permanents (20) sont réunis en un disque magnétique,
**caractérisée en ce que**
- entre lesdits bras (32a, 32b) sont disposées des premières pièces de guidage du flux (38a) écartées l'une de l'autre et affleurant avec les extrémités des bras (32a, 32b), lesdites premières pièces de guidage du flux (38a) ne présentant de liaison magnétiquement conductrice ni entre elles ni pas rapport aux bras (32a, 32b),
- du côté des éléments à aimants permanents (20) opposé aux extrémités des bras (32a, 32b) et aux premières pièces de guidage de flux (38a) sont disposées des secondes pièces de guidage du flux (38b), lesdites secondes pièces de guidage du flux (38b) ne présentant de liaison magnétiquement conductrice ni entre elles ni par rapport aux bras (32a, 32b ; 32a', 32b'),
- les extrémités des bras (32a, 32b) ainsi que les premières et les secondes pièces de guidage de flux (38a, 38b) sont tournées vers les éléments à aimants permanents (20) en formant à chaque fois un entrefer (16a, 16b, 16c, 16d, 16e, 16f), et
- les éléments à aimants permanents (20) sont, dans certaines positions du rotor (12) par rapport au stator (14), au moins partiellement alignés avec au moins quelques-unes des premières ou des secondes pièces de guidage de flux (38a, 38b) ainsi qu'avec les extrémités des bras (32a, 32b),
- au moins deux premières ou secondes pièces de guidage de flux (38a, 38b), ou plus, étant disposées entre deux extrémités des bras (32a, 32b ; 32a', 32b') si bien que le flux magnétique traverse plusieurs entrefers (16a, 16b, 16c ; 16d, 16e, 16f) entre
-- l'extrémité d'un des bras (32a, 32b ; 32a', 32b') et le disque magnétique (22),
-- le disque magnétique (22) et les premières pièces de guidage de flux (38a),
-- le disque magnétique (22) et les secondes pièces de guidage de flux (38b), ainsi qu'entre
-- le disque magnétique (22) et l'extrémité de l'autre bras (32a, 32b ; 32a', 32b').

2. Machine électrique (10) excitée par des aimants permanents selon la revendication 1, dans le cadre de laquelle
- les premières et les secondes pièces de guidage de flux (38a, 38b) ainsi que la culasse de flux magnétique (30) sont constituées de tôles empilées en fer doux, lesdites tôles étant orientées parallèlement à une face frontale du disque magnétique (22).

3. Machine électrique (10) excitée par des aimants permanents selon la revendication 1 ou 2, dans le cadre de laquelle
- des éléments à aimants permanents (20) adjacents sont orientés transversalement ou longitudinalement par rapport à la surface du disque magnétique (22) tournée vers les entrefers (16a, 16b, 16c, 16d, 16e, 16f).

4. Machine électrique (10) excitée par des aimants permanents selon l'une des revendications précédentes, dans le cadre de laquelle
- des guides de flux (24) en fer doux sont disposés entre des éléments à aimants permanents (20) adjacents et orientés longitudinalement du disque magnétique.

5. Machine électrique (10) excitée par des aimants permanents selon l'une des revendications précédentes, dans le cadre de laquelle
- au moins deux premières pièces de guidage de flux (38a) et au moins deux secondes pièces de guidage de flux (38b) sont disposées entre deux bras (32a, 32b) adjacents.

6. Machine électrique (10) excitée par des aimants permanents selon l'une des revendications précédentes, dans le cadre de laquelle
- les premières pièces de guidage de flux (38a) sont disposées décalées par rapport aux secondes pièces de guidage de flux, (38b) longitudinalement au sens de déplacement, ou disposées en alignement avec ces dernières.

7. Machine électrique (10) excitée par des aimants permanents selon l'une des revendications précédentes, dans le cadre de laquelle
- les premières et/ou les secondes pièces de guidage de flux (38a, 38b) présentent une configuration pour l'essentiel trapézoïdale en coupe transversale, les plus grandes surfaces des pièces de guidage de flux étant tournées vers le disque magnétique (22).

8. Machine électrique (10) excitée par des aimants permanents selon l'une des revendications précédentes, dans le cadre de laquelle
- les premières et/ou les secondes pièces de guidage de flux (38a, 38b) présentent, longitudinalement au sens de déplacement et dans la zone de leur surface tournée vers le disque magnétique, une configuration faisant face à plus d'un, mais non pas à plus de deux éléments à aimants permanents (20) adjacents du disque magnétique.

9. Machine électrique (10) excitée par des aimants permanents selon l'une des revendications précédentes, dans le cadre de laquelle
- l'agencement de bobines (28) présente plusieurs bobinages disposés coaxialement les uns à côté des autres, lesquels sont conçus pour fonctionner de manière déphasée les uns par rapport aux autres.

10. Machine électrique (10) excitée par des aimants permanents selon l'une des revendications précédentes, dans le cadre de laquelle
- des connecteurs (60) magnétiquement inactifs, qui déterminent la position relative des pièces de guidage de flux (38a, 38b) les unes par rapport aux autres, sont disposés entre des pièces de guidage de flux (38a, 38b) adjacentes.

11. Machine électrique (10) excitée par des aimants permanents selon l'une des revendications précédentes, dans le cadre de laquelle
- le disque magnétique est conçu comme un disque circulaire qui présente sur sa circonférence extérieure et/ou sur sa circonférence intérieure une bague support magnétiquement inactive.

12. Machine électrique (10) excitée par des aimants permanents selon l'une des revendications précédentes, dans le cadre de laquelle
- un agencement de bobines (28) comportant au moins un bobinage qui entoure au moins partiellement une culasse de flux (30, 30'), laquelle présente au moins un bras (32a, 32b), est respectivement disposé aux deux faces frontales du disque magnétique (22) tournées vers les entrefers.

13. Machine électrique (10) excitée par des aimants permanents selon l'une des revendications précédentes, dans le cadre de laquelle
- chacun des bras (32a, 32b) présente deux extrémités, et des premières et des secondes pièces de guidage de flux (38a, 38b) sont respectivement disposées entre deux extrémités des bras (32a, 32b) se faisant face l'une à l'autre.

14. Machine électrique (10) excitée par des aimants permanents selon l'une des revendications précédentes, dans le cadre de laquelle
- un flux magnétique s'écoule d'un des bras (32a) vers l'autre bras (32b) en passant à travers les éléments à aimants permanents (20) et à travers les premières et les secondes pièces de guidage de flux (38a, 38b) disposées des deux côtés du disque magnétique (22) lorsque le disque magnétique (22) se déplace par rapport aux culasses de flux (30, 30') et aux premières et aux secondes pièces de guidage de flux (38a, 38b).
